# EUROPÄISCHE PATENTSCHRIFT

(11) **EP 1 042 755 B1**
(45) Veröffentlichungstag und Bekanntmachung des Hinweises auf die Patenterteilung: **30.11.2005**
(21) Anmeldenummer: 98964496.8
(22) Anmeldetag: 10.12.1998
(51) Int. Cl.: H01B 1/12, H05B 33/28

(54) **SIEBDRUCKPASTE ZUR HERSTELLUNG ELEKTRISCH LEITFÄHIGER BESCHICHTUNGEN**
SCREEN PRINTING PASTE FOR PRODUCING ELECTRICALLY CONDUCTIVE COATINGS
PATE DE SERIGRAPHIE POUR PRODUIRE DES REVETEMENTS ELECTROCONDUCTEURS

(30) Priorität: 23.12.1997 DE 19757542
(43) Veröffentlichungstag der Anmeldung: 11.10.2000
(73) Patentinhaber: H.C. Starck GmbH, 38642 Goslar (DE)
(72) Erfinder: JONAS, Friedrich, D-52066 Aachen (DE); GUNTERMANN, Udo, D-47800 Krefeld (DE)
(74) Vertreter: Feldhues, Michael L.F.
(86) Internationale Anmeldenummer: PCT/EP1998/008075
(87) Internationale Veröffentlichungsnummer: WO 1999/034371

(56) Entgegenhaltungen:
- EP-A- 0 440 957
- EP-A- 0 564 911
- EP-A- 0 686 662
- EP-A- 0 713 140
- DE-A- 4 211 459
- US-A- 5 624 605
- PAJ und WPI Zusammenfassungen von JP-A-4100867

## Beschreibung

Die vorliegende Erfindung betrifft eine Siebdruckpaste zur Herstellung elektrisch leitfähiger Beschichtungen.

Elektrisch leitfähige organische Polymere zur Herstellung leitfähiger Beschichtungen sind prinzipiell bekannt. In der EP-A 440 957 sind zB. spezielle Polythiophenderivate zur Herstellung antistatischer Beschichtungen beschrieben. EP-A 686 662 lehrt die Kombination aus diesen Polythiophenderivaten und speziellen hydroxylsubstituierten Additiven zur Herstellung gut leitfähiger transparenter Elektroden für Displayanwendungen, z.B. Elektrolumineszensanzeigen. Die dort beschriebenen leitfähigen Schichten werden im allgemeinen vollflächig aufgebracht z.B. durch Gießen. Für viele Anwendungen ist es aber erforderlich, strukturierte Elektroden aus den leitfähigen Polythiophenderivaten aufzubringen. Ein in der Technik vielfach eingesetztes Verfahren zur Herstellung von strukturierten Schichten ist der Siebdruck In der Praxis hat es sich gezeigt, daß die in EP-A 440 957 beschriebenen Beschichtungslösungen nicht zum Aufbringen durch Siebdruck geeignet sind, da die Viskosität der Polythiophenlösungen zu niedrig ist.

Aufgabe der Erfindung war es deshalb, für den Siebdruck geeignete Druckpasten auf Basis leitfähiger Polymere herzustellen. Überraschenderweise wurde gefunden, daß durch. Einsatz geeigneter Verfahren bei der Herstellung der leitfähigen Polymere die Viskosität der Lösungen soweit erhöht werden kann, daß die Lösungen durch Siebdruck verarbeitet werden können, ohne daß die Leitfähigkeit der fertigen Beschichtungen nennenswert beeinträchtigt wird.

Gegenstand der Erfindung sind Siebdruckpasten mit einer Viskosität von 1 bis 200 dPas, enthaltend eine Lösung oder Dispersion eines leitfähigen Polymers sowie ggfs. Bindemittel, Verdicker und Füllstoffe.

Die erfindungsgemäßen Siebdrukpasten enthalten 3,4-Polyethylendioxythiophen-Kationen und Polystyrolsulfonat-Anionen, wobei deren Gehalt in den erfindungsgemaßen Siebdruckpasten größer 2 Gew.-% ist. Die Siebdruckpasten werden erhalten durch Einengen einen Dispersion mit einen Gehalt an 3,4 Polyethylendioxythiophen-Kationen und Polystyrolsulfonat-Anionen von kleiner 2 Gew% durch. Entfernen des Lösungsmittels auf einen Feststoffgehalt größer 2 Gew.-%. Diese Dispersionen können beispielsweise durch Einengen (bevorzugt unter vermindertem Druck) einer handelsüblichen, 1,3 Gew.-% 3,4-Polyethylendioxthiophen / Polystyrolsulfonat enthaltenden Dispersion hergestellt werden. Dies ist überraschend, da es sich gezeigt hat, daß die direkte Herstellung der Dispersion mit Feststoffgehalten größer 2 Gew.-% nicht möglich ist, ohne daß es zu einer Vergelung der Dispersion und Bildung fester Partikel kommt.

Zur Herstellung der Siebdruckpasten geeignete Lösungsmittel sind Wasser; mit Wasser mindestens teilweise mischbare Alkohole, wie Methanol, Ethanol, Isopropanol, Propanol, Butanol, Glykole wie Ethylenglykol, Propylenglykol, Glykolacetat, Glykolbutyrat, Methoxypropylacetat; Ketone wie Aceton, Methylethylketon, Methylisobutylketon, Diacetonalkohol; Amide wie N,N-Dimethylacetamid, N,N-Dimethylformamid, N-Methylpyrrolidon, N-Methyl-caprolactam.

Die Viskosität der Siebdruckpasten wird auf Werte von 1 bis 200 dPas, bevorzugt 10 bis 100 dPas eingestellt.

Zur Einstellung der Viskosität können den. Dispersionen der leitfähigen Polymere Verdickungsmittel und/oder Bindermittel zugesetzt werden. Geeignete Verdikkungsmittel bzw. Bindemittel sind z.B. Carrageenane, Verdicker auf Polyuretanbasis (z.B. Borchigel L 75 der Fa. Borchers), Polysaccharide, Polyacrylate, Polyvinylpyrrolidon, Polyethylenoxide, Agar Agar, Trabant, Gummi Arabicum, Alginate, Pektine, Guar-Mehl, Johannisbrotbaumkernmehl, Stärke, Dextrine, Gelatine, Casein, Carboxymethylcellulose u.a. Celluloseether, Hydroxyethylcellulose, Hydroxypropylcellulose, Polyurethane, Polyvinylacetate, Polystyrol, Polycarbonat, Polyester, Polyvinylalkohol, Polyamide. Die Verdicker bzw. Bindemittel auf Basis organischer Monomere können als Homopolymere oder auch als Copolymere verwendet werden. Sie kommen als wasserlösliche oder in Wasser dispergierbare bzw. emulgierbare Polymere zum Einsatz. Zur Verbesserung der Wasserverträglichkeit hat es sich bewährt, partiell sulfonierte Polymere zu verwenden

Die Verdickungmittel und/oder Bindemittel werden in einer Menge von 0 bis 10000 %, bevorzugt 50 bis 1000 %, bezogen auf den Feststoffgehalt der Lösungen an leitfähigem Polymer, zugegeben.

Geeignete Additive zur Erhöhung der Leitfähigkeit der Beschichtung sind z.B. Zuckeralkohole wie Sorbit, Mannit, Sacharose, Fructose, wie sie in der EP-A 686 662 beschrieben sind.

Den Siebdruckpasten können auch Füllstoffe zur Erzielung der gewünschten Rheologie zugesetzt werden. Geeignete Füllstoffe sind Metalloxide wie Titandioxid, Zinkoxid, Aluminiumoxid; elektrisch leitfähige Metalloxide wie Indiumzinnoxid, Antimonzinnoxid; Metalle wie Silber Kupfer, Gold, Palladium, Platin; Siliciumdioxid, Silikate, Kieselsäuren, Polykieselsäuren, Zeolithe, Erdalkalicarbonate wie Calciumcarbonat, Schichtsilikate und Tonmineralien wie Montmorillonite oder Bentonite.

Sollen transparente Beschichtungen hergestellt werden, so muß der Durchmesser der Teilchen unterhalb der Wellenlänge des sichtbaren Lichtes liegen; bevorzugt beträgt er 5 bis 400 nm. Zur Herstellung opaker Schichten kann die Teilchengröße auch darüber liegen; er beträgt dann vorzugsweise 0,4 bis 20 µm.

Im Falle des Zusatzes der leitfähigen Metalloxide können synergistische Effekte zum Tragen kommen, d.h die Leitfähigkeit der Beschichtungen aus der Kombination aus leitfähigem Metalloxid und leitfähigem Polymer ist höher als die Leitfähigkeit einer Beschichtung der Einzelkomponenten.

Bezogen auf den Feststoffgehalt der Siebdruckpaste an leitfähigem Polymer werden der Siebdruckpaste 0 bis 1000 Gew.-%, bevorzugt 0 bis 200 Gew.-% Füllstoff zugesetzt.

Weiterhin können den Siebdruckpasten Vernetzer zugesetzt werden wie Epoxysilane (z.B. 3-Glycidoxypropyltrimethoxysilan), Silanhydrolysate (z.B. Hydolysate des Tetraethoxysilans) oder Di- bzw Oligoisocyanate, ggfs. in verkappter Form.

Weiterhin können die Siebdruckpasten zur Herstellung gefärbter Elektroden durch Zugabe von organischen oder anorganischen löslichen Farbstoffen bzw. Farbstoffpigmenten eingefärbt werden.

Weiterhin können den Siebdruckpasten zur Verbesserung des Benetzungsverhaltens der Pasten und der Oberflächeneigenschaften der gedruckten Elektroden Verlaufsmittel und oder Tenside und/oder Antischaummittel zugesetzt werden.

Die erhalfene Siebdruckpaste der leitfähigen Polythiophendispersion kann mit den anderen Bestandteilen wie Füllstoffen, Bindemitteln, Verdickern und/oder Vernetzern gemischt werden. Bei Einarbeitung fester Füllstoffe hat sich die Mischung mittels Dispergieraggregaten z.B. Kugelmühlen, Dissolvern bewährt.

Die Schichtdicke beträgt 10 nm bis 500 µm, bevorzugt 50 nm bis 10 µm. In Abhängigkeit von der Schichtdicke weisen die gedruckten Beschichtungen Oberflächenwiderstände von 1 bis 10⁸ Ω/□, bevorzugt 50 bis 10000 Ω/□ auf.

Die erfindungsgemäßen Siebdruckpasten können auf handelsüblichen Siebdruckmaschinen mit Polyester oder Metallsiebbespannungen verarbeitet werden. Die Verarbeitung mit Rotationssiebdruck oder Tampondruck ist ebenfalls möglich.

Nach dem Drucken werden die Beschichtungen getrocknet. Geeignete Trocknungstemperaturen liegen zwischen 0°C und 250°C. Bevorzugt wird bei erhöhter Temperatur getrocknet. Die Trocknungszeit liegt zwischen wenigen Sekunden und mehreren Stunden, bevorzugt beträgt sie 10 Sekunden bis 15 Minuten.

Die Siebdruckpasten, werden bevorzugt zur Herstellung transparenter Elektroden für Elektrolumineszenzanzeigen auf Basis anorganischer Luminophore wie Zinksulfid oder organischer Luminophore wie Polyparaphenylenvinylenderivate verwendet. Weiterhin können die Siebdruckpasten zur Herstellung von Elektroden für Liquid Crystal Displays oder Thin Film Transistor (TFT), angesteuerte LCD's oder als Basis zur elektrochemischen Abscheidung von Metallen, z.B. in der Leiterplattenindustrie, verwendet werden.

### Beispiele

### Beispiel 1

Eine handelsübliche 3,4-Polyethylendioxythiophen/Polystyrolsulfonatlösung (Baytron® P, Bayer AG) mit einem Feststoffgehalt von 1,3 Gew.% wird am Rotationsverdampfer bei 45°C und 20 mbar auf einen Feststoffgehalt von 3,0 Gew.-% eingeengt. 225 g dieser Lösung werden nach Zugabe von 25 g N-Methylpyrrolidon und 7,5 g 3-Glycidoxypropyltrimethoxysilan 10 Minuten mit einem Dissolver bei 8000 U/min gerührt. Die erhaltene Siebdruckpaste hat eine Viskosität von 8 dPas. Die Paste wird unter Verwendung eines Siebes aus Polyestergewebe mit 77 Fäden pro cm (Estal® mono der Fa. Sefar) zu einer Beschichtung von 5*5 cm² verdruckt und 5 Minuten bei 130°C getrocknet. Die Beschichtung ist transparent und weist einen Oberflächenwiderstand von 1100 Ω/□, gemessen nach DIN IEC 93, auf

### Beispiel 2

Eine handelsübliche 3,4-Polyethylendioxythiophen/Polystyrolsulfonatlösung (Baytron® P, Bayer AG) mit einem Feststoffgehalt von 1,3 Gew.% wird am Rotationsverdampfer bei 45°C und 20 mbar auf einen Feststoffgehalt von 3,0 Gew.-% eingeengt. 225 g dieser Lösung werden nach Zugabe von 25 g N-Methylpyrrolidon, 7,5 g 3-Glycidoxypropyltrimethoxysilan, 2,6 g Na Polyacrylat (Mirox® TBN der Fa. Stockhausen) und 51,5 g Methoxypropylacetat 10 Minuten mit einem Dissolver bei 8000 U/min gerührt. Die erhaltene Siebdruckpaste hat eine Viskosität von 30 dPas. Die Paste wird unter Verwendung eines Siebes aus Polyestergewebe mit 77 Fäden pro cm (Estal® mono der Fa. Sefar) zu einer Beschichtung von 5*5 cm² verdruckt und 5 Minuten bei 130°C getrocknet. Die Beschichtung ist transparent und weist einen Oberflächenwiderstand von 1000 Ω/□, gemessen nach DIN IEC 93, auf

## Patentansprüche

1. Verfahren zur Herstellung von Siebdruckpasten mit einer Viskosität von 1 bis 20 dPas, bei dem eine Dispersion mit einem Gehalt < 2 Gew.-% 3,4-Polyethylendioxythiophen/Polystyrolsulfonat durch Entfernen des Lösungsmittels auf einen Feststoffgehalt > 2 Gew.-% eingeengt wird und ggfs. anschließend Bindemittel und/oder Verdicker und/oder Füllstoffe zugesetzt werden.

2. Siebdruckpaste mit einer Viskosität von 1 bis 200 dPas, enthaltend eine Dispersion eines leitfähigen Polymers sowie ggfs. Bindemittel, Verdicker und Füllstoffe, **dadurch gekennzeichnet, dass** sie 3,4-Polyethylendioxythiophen-Kationen als leitfähiges Polymer und Polystyrolsulfonat-Anionen enthält, und deren Gehalt an 3,4-Polyethylendioxythiophen / Polystyrolsulfonat > 2 Gew.-% beträgt, erhältlich nach einen Verfahren gemäß Anspruch 1.

3. Verwendung der Siebdruckpaste nach Anspruch 2 zur Herstellung leitfähiger Beschichtungen.

4. Verwendung der Siebdruckpaste nach Anspruch 2 zur Herstellung von transparenten, ggfs. gefärbten Elektroden für organische oder anorganische Elektrolumineszensanzeigen und Liquid Crystal Displays.

## Claims

1. Process for the production of screen printing pastes having a viscosity of from 1 to 200 dPas, in which a dispersion containing < 2 wt.% 3,4-polyethylenedioxythiophene/polystyrenesulfonate is concentrated to a solids content > 2 wt.% by removal of the solvent, and then binders and/or thickeners and/or fillers are optionally added.

2. Screen printing paste having a viscosity of from 1 to 200 dPas, comprising a dispersion of a conductive polymer as well as, optionally, binders, thickeners and fillers, **characterised in that** it comprises 3,4-polyethylenedioxythiophene cations as the conductive polymer and polystyrenesulfonate anions, and its content of 3,4-polyethylenedioxythiophene/polystyrenesulfonate is > 2 wt.%, obtainable by a process according to claim 1.

3. Use of the screen printing paste according to claim 2 in the production of conductive coatings.

4. Use of the screen printing paste according to claim 2 in the production of transparent, optionally coloured electrodes for organic or inorganic electroluminescent displays and liquid crystal displays.

## Revendications

1. Procédé de production de pâtes de sérigraphie ayant une viscosité de 1 à 200 dPas dans lequel une dispersion ayant une teneur en 3-4-polyéthylènedioxythiophène/polystyrènesulfonate inférieure à 2 % en masse est concentrée par élimination du solvant à une teneur en solides supérieure à 2 % en masse puis, éventuellement, des liants et/ou des épaississants et/ou des charges sont ajoutés.

2. Pâte de sérigraphie ayant une viscosité de 1 à 200 dPas contenant une dispersion d'un polymère conducteur ainsi éventuellement que des liants, des épaississants et des charges, **caractérisée en ce qu'**elle contient des cations 3,4-polyéthylènedioxythiophène comme polymère conducteur et des anions polystyrènesulfonate, et dont la teneur en 3,4-polyéthylènedioxythiophène/polystyrènesulfonate est supérieure à 2 % en masse, pouvant être obtenue par un procédé selon la revendication 1.

3. Utilisation de la pâte de sérigraphie selon la revendication 2 pour la production de revêtements conducteurs.

4. Utilisation de la pâte de sérigraphie selon la revendication 2 pour la production d'électrodes transparentes, éventuellement colorées, pour dispositifs d'affichage électroluminescents organiques ou inorganiques et liquid crystal displays.
